# EUROPÄISCHE PATENTSCHRIFT

(11) **EP 3 098 444 B1**
(45) Veröffentlichungstag und Bekanntmachung des Hinweises auf die Patenterteilung: **05.07.2017**
(21) Anmeldenummer: 15169980.8
(22) Anmeldetag: 29.05.2015
(51) Int. Cl.: F03G 7/06

(54) **AKTUATOREINRICHTUNG FÜR EINE RÜCKBLICKVORRICHTUNG EINES KRAFTFAHRZEUGS**
ACTUATOR FOR A REAR VIEWING DEVICE OF AN AUTOMOBILE
ACTIONNEUR POUR UN RETROVISEUR DESTINE A UN VEHICULE

(43) Veröffentlichungstag der Anmeldung: 30.11.2016
(73) Patentinhaber: SMR Patents S.à.r.l., 1653 Luxembourg (LU)
(72) Erfinder: WIECZOREK, Romeo, 73732 Esslingen (DE)
(74) Vertreter: Weber-Bruls, Dorothée

(56) Entgegenhaltungen:
- EP-A1- 2 781 743
- DE-A1-102005 059 081
- DE-A1-102013 221 336
- US-A- 4 965 545

## Beschreibung

Die Erfindung betrifft eine Aktuatoreinrichtung für eine Rückblickvorrichtung eines Kraftfahrzeugs mit mindestens einem Halteelement, mit mindestens einem Stellelement, das in eine Mehrzahl an Funktionsstellungen, insbesondere von einer Grundstellung in mindestens eine Endstellung, überführbar ist, mit mindestens einem Antriebsmittel, das mindestens ein, insbesondere drahtförmiges, Formgedächtniselement umfasst, welches zwischen dem Halteelement und dem Stellelement erstreckt und an beiden festlegbar oder festgelegt ist, dessen Erstreckung beim Betätigen, insbesondere elektrischen Bestromen, veränderbar ist, und durch dessen Veränderung der Erstreckung das mindestens eine Stellelement von einer Funktionsstellung in eine weitere Funktionsstellung, insbesondere von der Grundstellung in die Endstellung oder umgekehrt, überführbar ist, und mit mindestens einem Wärmeleitmittel, das zumindest in der Endstellung des Stellelements am Antriebsmittel anliegt. Darüber hinaus betrifft die Erfindung eine Rückblickvorrichtung mit einer derartigen Aktuatoreinrichtung und ein Kraftfahrzeug mit einer derartigen Rückblickvorrichtung und/oder mit einer derartigen Aktuatoreinrichtung.

Eine nicht gattungsgemäße Aktuatoreinrichtung, bei der das Antriebsmittel aus einem Formgedächtniselement besteht ist bekannt aus EP 2 781 743 A1.

Bei Aktuatoreinrichtungen mit Antriebsmitteln, die ein Formgedächtniselement umfassen, wird durch Bestromen des Antriebsmittels eine Verkürzung des Formgedächtniselements bewirkt. Durch das Festlegen des Antriebsmittels an einem ortsfesten Halteelement einem bewegbaren Stellelement wird das Stellelement durch Verkürzen des Antriebsmittels bewegt, insbesondere gedreht, wodurch bspw. ein Außenrückblickspiegel von einer abgeklappten Position in eine aufgeklappte Position überführbar ist.

Um ein Formgedächtniselement nach dessen Verkürzung, also nach dessen Bestromung, wieder ausdehnen zu können, muss das Formgedächtniselement abkühlen. Um die Abkühlzeit zu reduzieren ist bekannt, das Antriebselement zumindest abschnittsweise mit Silikon zu ummanteln, welches Wärme des Antriebselement kapazitiv speichert. Hierbei hat es sich als nachteilig herausgestellt, dass die durch das Silikon aufnehmbare Wärmemenge, bei mehrfahren Betrieb der Aktuatoreinrichtung innerhalb kurzen Zeitabständen, nicht ausreicht um weiterhin einen Kühleffekt zu erzielen.

Es ist daher die Aufgabe eines Ausführungsbeispiels der Erfindung, eine Aktuatoreinrichtung vorzuschlagen, bei der die Abkühlzeiten des Antriebsmittels reduzierbar sind.

Diese Aufgabe wird durch bei einer eingangs genannten Aktuatoreinrichtung dadurch gelöst, dass mindestens ein Schaltmittel vorgesehen ist, durch welches das mindestens eine Antriebsmittel und das mindestens eine Wärmeleitmittel in der Grundstellung des Stellelements berührungsfrei zueinander anordenbar oder angeordnet sind und/oder durch welches das mindestens eine Antriebsmittel und das mindestens eine Wärmeleitmittel zumindest in der Endstellung des Stellelements einander zumindest abschnittsweise berührend anordenbar oder angeordnet sind.

Dadurch, dass die Aktuatoreinrichtung ein Schaltmittel umfasst durch das das Antriebsmittel und das Wärmeleitmittel in der Grundstellung des Stellelements berührungsfrei zueinander angeordnet sind und durch das das Antriebsmittel und das Wärmeleitmittel einander berühren, wenn das Stellelement in der Endstellung angeordnet ist, kann die aufgrund des Bestromens des Antriebsmittels entstandene Wärme innerhalb des Antriebselement über das Wärmeleitmittel abgeführt werden.

Dadurch, dass Antriebsmittel und Wärmeleitmittel einander in der Endstellung des Stellmittels einander berühren ist gewährleistet, dass das Antriebsmittel ausreichend seine Länge ändert, bevor es die zur Längenänderung notwendige Wärme an das Wärmeleitmittel abgibt.

Die Aktuatoreinrichtung kann grundsätzlich eine Baugruppe einer beliebigen Fahrzeugkomponente sein, bei der ein Stellelement von einer Funktionsstellung in eine weitere Funktionsstellung überführt werden soll. Das Stellelement kann hierbei unmittelbar oder mittelbar zum Verändern der Position eines Bauteils relativ zu einem anderen Bauteil Verwendung finden, beispielsweise zum An- und/oder Abklappen von Bauteilen und zum Öffnen von durch das Bauteil verschlossene oder verschließbare Öffnungen.

Grundsätzlich ist es denkbar, dass das Stellelement in einer Mehrzahl an Funktionsstellungen anordenbar ist. Hierbei können die Grundstellung und die Endstellung Randbereiche darstellen, zwischen denen die Mehrzahl an Funktionsstellungen angeordnet ist.

Es ist denkbar, dass das Wärmeleitmittel im wesentlichen ortsfest und das Antriebsmittel quer zu seiner Erstreckung zwischen Haltelement und Stellelement durch das Schaltmittel bewegbar ist oder dass das Antriebsmittel im wesentlichen ortsfest und das Wärmeleitmittel quer oder schräg zur Erstreckung des Antriebsmittels zwischen Haltelement und Stellelement durch das Schaltmittel bewegbar ist. Darüber hinaus ist es denkbar, dass sowohl Antriebsmittel als auch Wärmeleitmittel bewegbar sind. Wenn allerdings entweder das Antriebsmittel oder das Wärmeleitmittel bewegbar ist und das jeweils andere Mittel ortsfest ist, ist die Konstruktion des Schaltelements und die Anordnung der einzelnen Bauteile erleichtert.

Grundsätzlich ist es denkbar, dass das Schaltmittel und das Stellelement separate und/oder voneinander separierbare Bauteile und jeweils eine von der Kinematik des jeweils anderen Bauteils unabhängige eigene Kinematik umfassen. Die Aktuatoreinrichtung lässt sich jedoch einfach und kostengünstig herstellen, wenn das Schaltmittel und das Stellelement eine gemeinsame Kinematik umfassen und ein Überführen des Stellelements von der Grundstellung in die Endstellung automatisch ein Überführen von einer berührungsfreien Anordnung von Antriebsmittel und Wärmeleitmittel in eine einander berührende Anordnung von Antriebsmittel und Wärmeleitmittel umfasst.

Die Aktuatoreinrichtung lässt sich bei einem Ausführungsbeispiel dadurch weiter vereinfachen, dass das Schaltelement und das Stellelement ein gemeinsames Bauteil umfassen, insbesondere dass das Schaltelement eine Formgebung eines Oberflächenabschnitts des Stellelements umfasst, durch die das Antriebsmittel und/oder das Wärmeleitmittel beim Überführen des Stellelements von der Grundstellung in die Endstellung an einem durch Überführen des Stellelements veränderbaren Berührpunkt des Oberflächenabschnitts anliegend quer oder schräg zur Erstreckung des Antriebsmittels zwischen Haltelement und Stellelement in Richtung auf das Wärmeleitmittel bzw. Antriebsmittel bewegbar ist.

Unter einem durch Überführen des Stellelements veränderbaren Berührpunkt wird nachfolgend ein Punkt verstanden, an dem das Antriebsmittel und/oder das Wärmeleitmittel erstmalig anliegen. Der Punkt, an dem das Antriebsmittel und das Wärmemittel erstmalig anliegen kann sich beim Überführen des Stellelements von der Grundstellung in die Endstellung ändern.

Hierdurch ist zudem die Anzahl der einzelnen Bauteile der Aktuatoreinrichtung weiter reduzierbar, wodurch eine Montage der Aktuatoreinrichtung vereinfacht ist.

Grundsätzlich ist es denkbar, dass das Überführen des Stellelements von der Grundstellung in die Endstellung über eine beliebige Bewegungsform erfolgen kann, bspw. durch eine lineare Bewegung. Bei einer Weiterbildung der letztgenannten Ausführungsform erweist es sich jedoch als vorteilhaft, wenn das Stellelement bei Veränderung der Erstreckung des mindestens einen Antriebsmittels mittels Drehung um eine Drehachse von der Grundstellung in die Endstellung überführbar ist und/oder das beim Drehen des Stellelements um die Drehachse der Abstand zwischen der Drehachse und des durch Überführen des Stellelements veränderbaren Berührpunkts des Oberflächenabschnitts veränderbar ist.

Insbesondere wenn das Antriebsmittel drahtförmig ausgebildet ist, erweist es sich als vorteilhaft, wenn das mindestens eine Antriebsmittel an dem Oberflächenabschnitt des Stellelements an einem Festlegeelement festlegbar ist und/oder wenn das mindestens eine Antriebsmittel zwischen dem durch Überführen des Stellelements veränderbaren Berührpunkt und dem Festlegeelement flächenhaft am Oberflächenabschnitt anliegt.

Die Kontur des Oberflächenabschnitts kann grundsätzlich beliebig gebildet sein. Der gewünschte technische Effekt, nämlich das Einander annähern von Antriebsmittel und Wärmeleitmittel beim Überführen des Stellelements von der Grundstellung in die Endstellung lässt sich jedoch einfach realisieren, wenn der Oberflächenabschnitt des Stellelements durch eine zumindest abschnittsweise verrundete, insbesondere kreisrunde, ovale oder sinusförmige, und/oder durch eine zumindest abschnittsweise gerade Außenkontur gebildet ist.

Grundsätzlich ist es denkbar, dass die Aktuatoreinrichtung mehrere Antriebsmittel umfasst, wobei bspw. ein zweites Antriebsmittel das Stellelement in die Grundstellung zurückführt. Bei einer Ausführungsform der Aktuatoreinrichtung ist ein Rückstellmittel vorgesehen, das das Stellelement in die Grundstellung vorspannt. Hierbei kann es sich bei dem Rückstellmittel bspw. um eine Feder, bspw. Torsionsfeder, oder dergleichen handeln.

Das Wärmeleitmittel kann grundsätzlich eine beliebige Kontur umfassen, solange gewährleistet ist, dass sich Antriebsmittel und Wärmeleitmittel in der Grundstellung des Stellelements nicht berühren und in der Endstellung des Stellelements einander berühren. Ebenfalls erweist es sich als vorteilhaft, wenn das Wärmeleitmittel eine im wesentlichen parallel zum Antriebsmittel erstreckte durchgehende Aussparung umfasst, innerhalb der das Antriebsmittel zwischen dem Halteelement und dem Stellelement verlaufend angeordnet ist und an dessen innerer Oberfläche das Antriebsmittel in der Endstellung des Stellelements anliegt und/oder das das Wärmeleitmittel streifen- oder plattenartig ausgebildet ist und an dessen äußerer Oberfläche das Antriebsmittel in der Endstellung des Stellelements anliegt.

Wenn das Antriebsmittel eine durchgehende Aussparung umfasst, kann das Antriebsmittel bspw. eine zylindrische Hülse umfassen.

Um zu verhindern, dass es zwischen Antriebsmittel und den Wärmeleitmittel in der Endstellung des Drehelements zu einem Kurzschluss kommt, bspw. wenn das Wärmeleitmittel ein Metall umfasst, erweist es sich als vorteilhaft, wenn die Aktuatoreinrichtung mindestens ein zwischen dem Antriebsmittel und dem Wärmeleitmittel angeordnetes elektrisch isolierend und thermisch leitendes Isolierelement umfasst.

Ferner ist bei einer weiteren Ausführungsform der Aktuatoreinrichtung mindestens ein am Antriebsmittel unmittelbar anliegendes und das Antriebsmittel zumindest nahezu in Gänze umgebendes Kühlelement vorgesehen. Wenn das Kühlelement bspw. einen Kunststoff, insbesondere Silikon, umfasst, kann das Isolierelement durch das Kühlelement gebildet sein.

Darüber hinaus kann die Aktuatoreinrichtung mindestens eine mit dem Wärmeleitmittel thermisch verbindbare oder verbundene Kühlrippe umfassen, durch die durch Konvektion- und/oder durch erzwungene Konvektion, bspw. durch Umströmung durch Fahrtwind, Wärme an die Umgebung abgebbar ist.

Wenn die Aktuatoreinrichtung bspw. in einem Außenrückblickspiegel vorgesehen ist kann die mindestens eine Kühlrippe durch eine an der äußeren Oberfläche des Außenspiegels angeordnete, aerodynamisch wirksame, Kontur gebildet sein.

Es erweist sich als vorteilhaft, wenn das Wärmeleitmittel, das Kühlelement und/oder die mindestens eine Kühlrippe einen Kunststoff, insbesondere Silikon, und/oder oder ein Metall, insbesondere Kupfer oder Eisen, umfasst.

Darüber hinaus wird die Aufgabe gelöst durch eine Rückblickvorrichtung, wie Innen- oder Außenspiegel oder Kamera, für ein Kraftfahrzeug mit mindestens einer Aktuatoreinrichtung mit mindestens einem der zuvor genannten Merkmale.

Schließlich wird die Aufgabe gelöst durch ein Kraftfahrzeug mit mindestens einer Rückblickvorrichtung, wie Innen- oder Außenspiegel oder Kamera, und mindestens einem der zuvor genannten Merkmale und/oder mit mindestens einer Aktuatoreinrichtung mit mindestens einem der zuvor genannten Merkmale.

Die erfindungsgemäße Aktuatoreinrichtung, die erfindungsgemäße Rückblickvorrichtung sowie das erfindungsgemäße Kraftfahrzeug erweisen sich in mehrfacher Hinsicht als vorteilhaft:
Dadurch, dass das Antriebsmittel in einer Endstellung des Stellelements mit einem Wärmeleitmittel verbunden ist, kann schnell und einfach eine große im Antriebsmittel vorhandene Wärmemenge an das Wärmeleitmittel abgegeben werden. Hierdurch ist innerhalb des Antriebsmittel schnell wieder eine Temperatur erreicht, die ein Verlängern des Formgedächtniselements ermöglicht.

Weitere Merkmale, Einzelheiten sowie Vorteile entnehmen sich aus den beigefügten Patentansprüchen, aus der zeichnerischen Darstellung und nachfolgender Beschreibung einer bevorzugten Ausführungsform der Aktuatoreinrichtung.

In der Zeichnung zeigt:
- Figur 1: eine schematische Seitenansicht eines Ausführungsbeispiels der Aktuatoreinrichtung in der Grundstellung eines Stellelements;
- Figur 2: eine schematische Seitenansicht des Ausführungsbeispiels gemäß Figur 1 in der Endstellung des Stellelements;
- Figur 3: eine diagrammhafte Darstellung einer Bewegung eines Antriebsmittels in Richtung auf ein Wärmemittel in Abhängigkeit von Zeit- und Stromstärke.

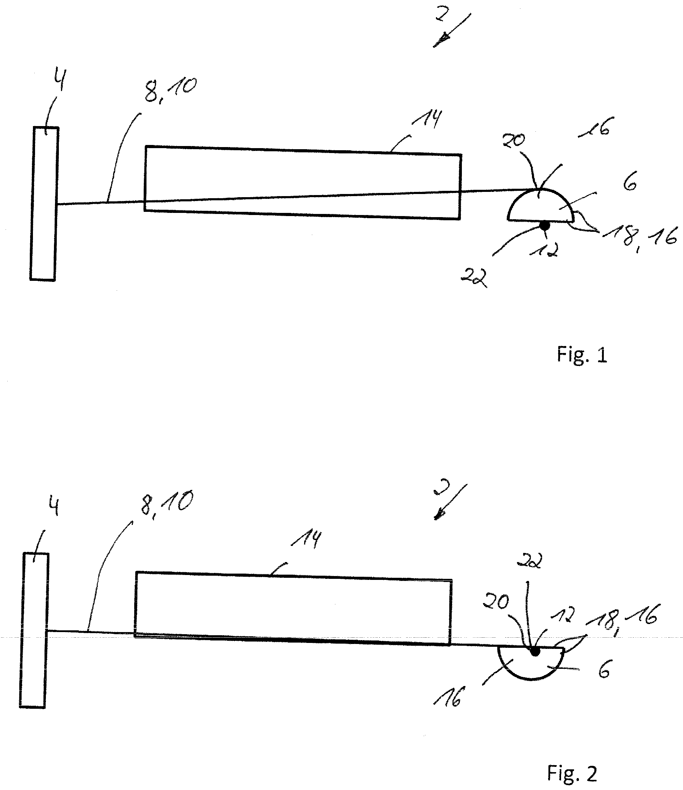

Die Figuren 1 und 2 zeigen eine schematische Darstellung einer insgesamt mit dem Bezugszeichen 2 versehene Aktuatoreinrichtung für eine Rückblickvorrichtung eines Kraftfahrzeugs. Die Aktuatoreinrichtung 2 umfasst ein Haltelement 4 und ein Stellelement 6. Das Stellelement 6 ist in einer Mehrzahl von Funktionsstellungen überführbar. In Figur 1 befindet sich das Stellelement 6 in einer Grundstellung. In Figur 2 befindet sich das Stellelement 6 in einer Endstellung. Zwischen dem Halteelement 4 und dem Stellelement 6 ist ein Antriebsmittel 8 angeordnet, das durch ein drahtförmiges Formgedächtniselement 10 gebildet ist. In Figur 1 ist das Antriebsmittel 8 unbetätigt und in Figur 2 betätigt. Betätigung erfolgt durch Bestromen des Antriebsmittels 8 wodurch das Antriebsmittel 8 bzgl. seiner Erstreckung zwischen Halteelement 4 und Stellelement 6 verkürzt wird und das Stellelement 6 hierdurch um eine Drehachse 12 gedreht wird.

Darüber hinaus umfasst die Aktuatoreinrichtung 2 ein Wärmeleitmittel 14. Das Wärmeleitmittel 14 und das Antriebsmittel 8 sind derart zueinander angeordnet, dass sie in der Grundstellung des Stellelements 6 (Figur 1) zueinander berührungsfrei verlaufen und in der Endstellung des Stellelements 6 (Figur 2) einander zumindest abschnittsweise berührend verlaufen. Hierdurch ist einer Wärmeübertragung vom Antriebsmittel 8 auf das Wärmeleitmittel 14 in der Endstellung des Stellelements 6 ermöglicht. Um das Antriebsmittel 8 und das Wärmeleitmittel 16 in der Grundstellung zueinander beabstandet zu halten umfasst die Aktuatoreinrichtung 2 ein Schaltmittel 16.

Bei dem in den Figuren gezeigten Ausführungsbeispielen ist das Wärmeleitmittel 14 ortsfest festgelegt, wohingegen das durch ein drahtförmiges Gedächtniselement 10 gebildete Antriebsmittel 8 durch das Schaltmittel 16 beim Überführen des Stellelements 6 von der Grundstellung in die Endstellung in Richtung auf das Wärmeleitmittel 14 bewegt wird.

Darüber hinaus ist bei dem in den Figuren 1 und 2 gezeigten Ausführungsbeispiel das Schaltmittel 16 als gemeinsames Bauteil mit dem Stellelement 6 ausgebildet und umfasst eine Formgebung eines Oberflächenabschnitts 18 des Stellelements 6. Die Formgebung des Oberflächenabschnitts 18 setzt sich zunächst aus einem verrundeten Abschnitt und einem darin anschließenden geraden Abschnitt der Außenkontur zusammen.

Im Folgenden wird die Wirkungsweise der Aktuatoreinrichtung 2 beschrieben:
In der Grundstellung des Stellelements 6 gemäß Figur 1 ist das Antriebsmittel 8 zwischen dem Haltelement 4 und dem Stellelement 6 erstreckt. Hierbei liegt das Antriebsmittel 8 an einem durch Überführen des Stellelements 6 veränderbaren Berührpunkt 20 an dem Oberflächenabschnitt 18 des Stellelements 6 erstmalig auf und liegt im weiteren Verlauf flächenhaft an dem Oberflächenabschnitt 18 an bis es durch ein Festlegeelement 22 am Stellelement 6 festgelegt ist. Beim Betätigen des Antriebsmittels 8, also beim Bestromen des Antriebsmittels 8, erhitzt sich das Antriebsmittel 8 und verkürzt seine Länge. Aufgrund der Festlegung des Antriebsmittels 8 durch das Festlegeelement 22 am Stellelement 6 wird das Stellelement 6 um die Drehachse 12 gedreht, wenn sich das Antriebsmittel 6 verkürzt.

Aufgrund der Außenkontur des Oberflächenabschnitts 18 bewegt sich das Antriebsmittel 8 hierdurch quer oder schräg zur Erstreckung des Antriebsmittels 10 zwischen Haltelement 4 und Stellelement 6. Beim Erreichen der Endstellung des Stellelements 6, wie in Figur 2 gezeigt, befindet sich der Berührpunkt 20 des Oberflächenabschnitts 18 des Stellelements 8 auf einer derartigen Höhe, dass das Antriebsmittel 8 und das Wärmeleitmittel 14 einander berühren. In der in Figur 2 gezeigten Anordnung kann Wärme des Antriebsmittels 8 auf das Wärmeleitmittel 14 übertragen werden.

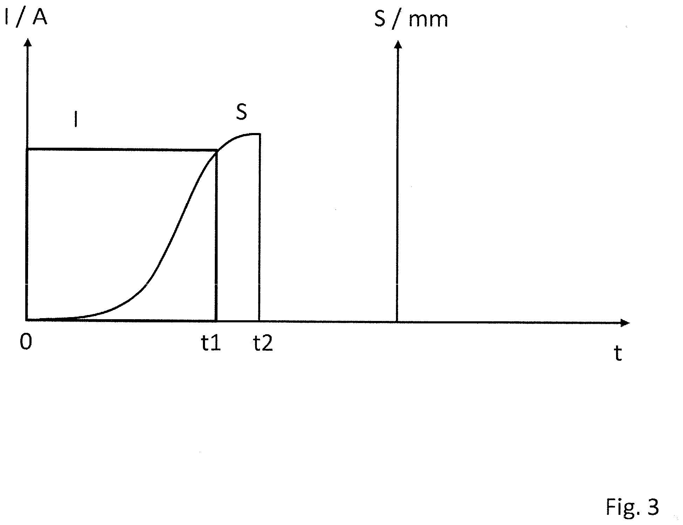

Figur 3 zeigt schematisch und diagrammartig die Bestromen mit einer Stromstärke I über eine Bestromungszeit t1 sowie die dadurch ausgelöste Bewegung S des Antriebsmittels 8 quer oder schräg zur Erstreckung des Antriebsmittels 8 zwischen Halteelement 4 und Stellelement 6 über die Zeit t betrachtet. Durch das Bestromen des Antriebsmittels bis zur Zeit t1 erhitzt sich das Antriebsmittel 8 so sehr, dass es sich auch nach Ende des Bestromens weiter ausdehnt. Zum Zeitpunkt t2 ist eine maximale Auslenkung erreicht. Hier berühren Antriebsmittel 8 und Wärmeleitmittel 14 einander, was zu einer Rückführung der Auslenkung des Antriebsmittels 8 in die Position t = 0 führt. Aufgrund der Formgebung des Oberflächenabschnitts 18 ist die Auslenkung des Antriebsmittels von t = 0 bis t2 nicht linear sondern sinusförmig.

Die in der vorstehenden Beschreibung vorkommenden Ansprüche sowie die in den Zeichnungen offenbarten Merkmale der Erfindung können sowohl einzeln, als auch in jeder beliebigen Kombination für die Verwirklichung der Erfindung in ihren verschiedenen Ausführungsform wesentlich sein.

### Bezugszeichenliste

- 2: Aktuatoreinrichtung
- 4: Halteelement
- 6: Stellelement
- 8: Antriebsmittel
- 10: Formgedächtniselement
- 12: Drehachse
- 14: Wärmeleitmittel
- 16: Schaltmittel
- 18: Oberflächenabschnitt
- 20: Berührpunkt
- 22: Festlegeelement

## Patentansprüche

1. Aktuatoreinrichtung (2) für eine Rückblickvorrichtung eines Kraftfahrzeugs mit mindestens einem Halteelement (4), mit mindestens einem Stellelement (6), das in einer Mehrzahl an Funktionsstellungen, insbesondere von einer Grundstellung in mindestens eine Endstellung, überführbar ist, mit mindestens einem Antriebsmittel (8), das mindestens ein, insbesondere drahtförmiges, Formgedächtniselement (10) umfasst, welches zwischen dem Halteelement (4) und dem Stellelement (6) erstreckt und an beiden festlegbar oder festgelegt ist, dessen Erstreckung beim Betätigen, insbesondere elektrischen Bestromen, veränderbar ist, und durch dessen Veränderung der Erstreckung das mindestens eine Stellelement (6) von einer Funktionsstellung in eine weitere Funktionsstellung, insbesondere von der Grundstellung in die Endstellung oder umgekehrt, überführbar ist, und mit mindestens einem Wärmeleitmittel (14), das zumindest in der Endstellung des Stellelements (6) am Antriebsmittel (8) anliegt, **gekennzeichnet durch**, mindestens ein Schaltmittel (16), durch welches das mindestens eine Antriebsmittel (8) und das mindestens eine Wärmeleitmittel (14) in der Grundstellung des Stellelements (6) berührungsfrei zueinander anordenbar oder angeordnet sind und/oder durch welches das mindestens eine Antriebsmittel (8) und das mindestens eine Wärmeleitmittel (14) zumindest in der Endstellung des Stellelements (6) einander zumindest abschnittsweise berührend anordenbar oder angeordnet sind.

2. Aktuatoreinrichtung (2) nach Anspruch 1, **dadurch gekennzeichnet, dass** das Wärmeleitmittel (14) im wesentlichen ortsfest und das Antriebsmittel (8) quer zu seiner Erstreckung zwischen Haltelement und Stellelement (6) durch das Schaltmittel (16) bewegbar ist oder dass das Antriebsmittel (8) im wesentlichen ortsfest und das Wärmeleitmittel (14) quer oder schräg zur Erstreckung des Antriebsmittels (8) zwischen Haltelement und Stellelement (6) durch das Schaltmittel (16) bewegbar ist.

3. Aktuatoreinrichtung (2) nach Anspruch 1 oder 2, **dadurch gekennzeichnet, dass** das Schaltmittel (16) und das Stellelement (6) eine gemeinsame Kinematik umfassen und ein Überführen des Stellelements (6) von der Grundstellung in die Endstellung automatisch ein Überführen von einer berührungsfreien Anordnung von Antriebsmittel (8) zu Wärmeleitmittel (14) in eine einander berührende Anordnung von Antriebsmittel (8) und Wärmeleitmittel (14) umfasst.

4. Aktuatoreinrichtung (2) nach mindestens einem der vorhergehenden Ansprüche, **dadurch gekennzeichnet, dass**
das Schaltelement und das Stellelement (6) ein gemeinsames Bauteil umfassen, insbesondere dass das Schaltelement eine Formgebung eines Oberflächenabschnitts (18) des Stellelements (6) umfasst, durch die das Antriebsmittel (8) und/oder das Wärmeleitmittel (14) beim Überführen des Stellelements (6) von der Grundstellung in die Endstellung an einem durch Überführen des Stellelements (6) veränderbaren Berührpunkt (20) des Oberflächenabschnitts (18) anliegend quer oder schräg zur Erstreckung des Antriebsmittels (8) zwischen Haltelement und Stellelement (6) in Richtung auf das Wärmeleitmittel (14) bzw. Antriebsmittel (8) bewegbar ist.

5. Aktuatoreinrichtung (2) nach Anspruch 4, **dadurch gekennzeichnet, dass**
das Stellelement (6) bei Veränderung der Erstreckung des mindestens einen Antriebsmittels (8) mittels Drehung um eine Drehachse (12) von der Grundstellung in die Endstellung überführbar ist und/oder das Beim Drehen des Stellelements (6) um die Drehachse (12) der Abstand zwischen der Drehachse (12) und des durch Überführen des Stellelements (6) veränderbaren Berührpunkts (20) des Oberflächenabschnitts (18) veränderbar ist.

6. Aktuatoreinrichtung (2) nach mindestens einem der vorhergehenden Ansprüche, **dadurch gekennzeichnet, dass**
das mindestens eine Antriebsmittel (8) an dem Oberflächenabschnitt (18) des Stellelements (6) an einem Festlegeelement (22) festlegbar ist und/oder dass das mindestens eine Antriebsmittel (8) zwischen dem durch Überführen des Stellelements (6) veränderbaren Berührpunkt (20) und dem Festlegeelement (22) flächenhaft am Oberflächenabschnitt (18) anliegt.

7. Aktuatoreinrichtung (2) nach mindestens einem der vorhergehenden Ansprüche, **dadurch gekennzeichnet, dass**
der Oberflächenabschnitt (18) des Stellelements (6) durch eine zumindest abschnittsweise verrundete, insbesondere kreisrunde, ovale oder sinusförmige, und/oder durch eine zumindest abschnittsweise gerade Außenkontur gebildet ist.

8. Aktuatoreinrichtung (2) nach mindestens einem der vorhergehenden Ansprüche, **gekennzeichnet durch**
mindestens ein Rückstellmittel, das das Stellelement (6) in die Grundstellung vorspannt.

9. Aktuatoreinrichtung (2) nach mindestens einem der vorhergehenden Ansprüche, **dadurch gekennzeichnet, dass**
das Wärmeleitmittel (14) eine im wesentlichen parallel zum Antriebsmittel (8) erstreckte durchgehende Aussparung umfasst, innerhalb der das Antriebsmittel (8) zwischen dem Halteelement (4) und dem Stellelement (6) verlaufend angeordnet ist und an dessen innerer Oberfläche das Antriebsmittel (8) in der Endstellung des Stellelements (6) anliegt und/oder das das Wärmeleitmittel (14) streifen- oder plattenartig ausgebildet ist und an dessen äußerer Oberfläche das Antriebsmittel (8) in der Endstellung des Stellelements (6) anliegt.

10. Aktuatoreinrichtung (2) nach mindestens einem der vorhergehenden Ansprüche, **gekennzeichnet durch**
mindestens ein zwischen dem Antriebsmittel (8) und dem Wärmeleitmittel (14) angeordnetes elektrisch isolierende und thermisch leitendes Isolierelement.

11. Aktuatoreinrichtung (2) nach mindestens einem der vorhergehenden Ansprüche, **gekennzeichnet durch**
mindestens ein am Antriebsmittel (8) unmittelbar anliegendes und das Antriebsmittel (8) zumindest nahezu in Gänze umgebenden Kühlelement.

12. Aktuatoreinrichtung (2) nach mindestens einem der vorhergehenden Ansprüche, **gekennzeichnet durch**
mindestens eine mit dem Wärmeleitmittel (14) thermisch verbindbare oder verbundene Kühlrippe, durch die durch Konvektion und/oder durch erwungene Konvektion, beispielsweise durch Umströmung durch Fahrtwind, Wärme an die Umgebung abgebbar ist.

13. Aktuatoreinrichtung (2) nach mindestens einem der vorhergehenden Ansprüche, **dadurch gekennzeichnet, dass**
das Wärmeleitmittel (14), das Kühlelement und/oder die mindestens eine Kühlrippe einen Kunststoff, insbesondere Silikon, und/oder oder ein Metall, insbesondere Kupfer oder Eisen, umfasst.

14. Rückblickvorrichtung, wie Innen- oder Außenspiegel oder Kamera, für ein Kraftfahrzeug mit mindestens einer Aktuatoreinrichtung (2) nach mindestens einem der Ansprüche 1 bis 13.

15. Kraftfahrzeug mit mindestens einer Rückblickvorrichtung, wie Innen- oder Außenspiegel oder Kamera, nach Anspruch 14 und/oder mit mindestens einer Aktuatoreinrichtung (2) nach mindestens einem der Ansprüche 1 bis 13

## Claims

1. An actuator device (2) for a rearview device of a motor vehicle, comprising at least one retaining element (4), at least one adjusting element (6) which can be transferred into a plurality of functional positions, in particular from a basic position into at least one end position, at least one driving means (8) which comprises at least one shape-memory element (10) which is, in particular, in the form of a wire, which extends between the retaining element (4) and the adjusting element (6) and can be or is secured to both, where the extension of said shape-memory element can be modified on being actuated, in particular on being electrically energized, and by means of the modification of the extension of which the at least one adjusting element (6) can be transferred from one functional position into another functional position, in particular from the basic position into the end position or vice versa, and at least one heat-conducting means (14) which lies in contact with the driving means (8) at least in the end position of the adjusting element (6), **characterized by** at least one switching means (16), by means of which the at least one driving means (8) and the at least one heat-conducting means (14) can be or are arranged with respect to one another with no contact in the basic position of the adjusting element (6) and/or by means of which the at least one driving means (8) and the at least one heat-conducting means (14) can be or are arranged touching one another at least in sections at least in the end position of the adjusting element (6).

2. The actuator device (2) according to Claim 1, **characterized in that** the heat-conducting means (14) is substantially stationary and the driving means (8) can be moved transversely to its extension between the retaining element and the adjusting element (6) by the switching means (16) or that the driving means (8) is substantially stationary and the heat-conducting means (14) can be moved transversely or obliquely to the extension of the driving means (8) between the retaining element and the adjusting element (6) by the switching means (16).

3. The actuator device (2) according to Claim 1 or 2, **characterized in that** the switching means (16) and the adjusting element (6) comprise joint kinematics and a transfer of the adjusting element (6) from the basic position into the end position automatically comprises a transfer from a non-contact arrangement of the driving means (8) to the heat-conducting means (14) into an arrangement of the driving means (8) and heat-conducting means (14) where they touch one another.

4. The actuator device (2) according to at least one of the preceding claims, **characterized in that**
the switching element and the adjusting element (6) comprise a joint component, in particular that the switching element comprises a shaping of a surface section (18) of the adjusting element (6), by means of which the driving means (8) and/or the heat-conducting means (14), on transferring the adjusting element (6) from the basic position into the end position lying in contact with a point of contact (20) of the surface section (18), which can be modified by transferring the adjusting element (6), can be moved transversely or obliquely to the extension of the driving means (8) between the retaining element and the adjusting element (6) in the direction of the heat-conducting means (14) or driving means (8).

5. The actuator device (2) according to Claim 4, **characterized in that**
the adjusting element (6), on modifying the extension of the at least one driving means (8), can be transferred from the basic position into the end position by being rotated about an axis of rotation (12), and/or that on rotating the adjusting element (6) about the axis of rotation (12) the distance between the axis of rotation (12) and the point of contact (20) of the surface section (18), which can be modified by transferring the adjusting element (6), can be modified.

6. The actuator device (2) according to at least one of the preceding claims, **characterized in that**
the at least one driving means (8) can be secured to the surface section (18) of the adjusting element (6) by a securing element (22) and/or that the at least one driving means (8) extensively lies in contact with the surface section (18) between the point of contact (20) which can be modified by transferring the adjusting element (6) and the securing element (22).

7. The actuator device (2) according to at least one of the preceding claims, **characterized in that**
the surface section (18) of the adjusting element (6) is formed by an external contour which is rounded, in particular circular, oval or sinusoidal, at least in sections, and/or by an external contour which is straight at least in sections.

8. The actuator device (2) according to at least one of the preceding claims, **characterized by**
at least one return means which biases the adjusting element (6) into the basic position.

9. The actuator device (2) according to at least one of the preceding claims, **characterized in that**
the heat-conducting means (14) comprises a continuous recess which extends substantially parallel to the driving means (8), inside which recess the driving means (8) is arranged extending between the retaining element (4) and the adjusting element (6) and with the inner surface of which the driving means (8) lies in contact in the end position of the adjusting element (6) and/or that the heat-conducting means (14) is configured in a strip or plate form and with the external surface of which the driving means (8) lies in contact in the end position of the adjusting element (6).

10. The actuator device (2) according to at least one of the preceding claims, **characterized by**
at least one electrically insulating and thermally conducting insulating element arranged between the driving means (8) and the heat-conducting means (14).

11. The actuator device (2) according to at least one of the preceding claims, **characterized by**
at least one cooling element which lies directly in contact with the driving means (8) and at least virtually enclosing the driving means (8) in its entirety.

12. The actuator device (2) according to at least one of the preceding claims, **characterized by**
at least one cooling rib which can be or is thermally connected to the heat-conducting means (14), by means of which cooling rib heat can be released into the surroundings by convection and/or by forced convection, for example by being flowed around by the head wind.

13. The actuator device (2) according to at least one of the preceding claims, **characterized in that**
the heat-conducting means (14), the cooling element and/or the at least one cooling rib comprises a plastic, in particular silicon, and/or a metal, in particular copper or iron.

14. A rearview device, such as an interior mirror or exterior mirror or camera, for a motor vehicle having at least one actuator device (2) according to at least one of Claims 1 to 13.

15. A motor vehicle having at least one rearview device, such as an interior mirror or exterior mirror or camera, according to Claim 14, and/or having at least one actuator device (2) according to at least one of Claims 1 to 13.

## Revendications

1. Dispositif d'actionnement (2) pour un système de rétroviseur d'un véhicule automobile, avec au moins un élément de maintien (4), avec au moins un élément de réglage (6) pouvant être placé dans une pluralité de positions fonctionnelles, en particulier d'une position initiale vers au moins une position finale, avec au moins un moyen d'entraînement (8) comprenant au moins un élément à mémoire de forme (10), en particulier filaire, lequel s'étend entre l'élément de maintien (4) et l'élément de réglage (6) et est fixable ou fixé sur les deux, dont l'extension peut être modifiée par actionnement, en particulier par application de courant électrique, et dont la modification d'extension fait passer ledit au moins un élément de réglage (6) d'une position fonctionnelle à une autre position fonctionnelle, en particulier de la position initiale à la position finale ou inversement, et avec au moins un moyen conducteur thermique (14), lequel est appliqué contre le moyen d'entraînement (8) au moins en position finale de l'élément de réglage (6), **caractérisé par** au moins un moyen de commutation (16), au moyen duquel ledit au moins un moyen d'entraînement (8) et ledit au moins un moyen conducteur thermique (14) sont disposables ou disposés sans contact entre eux en position initiale de l'élément de réglage (6) et/ou au moyen duquel ledit au moins un moyen d'entraînement (8) et ledit au moins un moyen conducteur thermique (14) sont disposables ou disposés en contact au moins partiel entre eux au moins en position finale de l'élément de réglage (6).

2. Dispositif d'actionnement (2) selon la revendication 1, **caractérisé en ce que** le moyen conducteur thermique (14) est sensiblement fixe et le moyen d'entraînement (8) est déplaçable par le moyen de commutation (16) transversalement à son extension entre l'élément de maintien et l'élément de réglage (6), ou **en ce que** le moyen d'entraînement (8) est sensiblement fixe et le moyen conducteur thermique (14) est déplaçable par le moyen de commutation (16) transversalement ou obliquement à l'extension du moyen d'entraînement (8) entre l'élément de maintien et l'élément de réglage (6).

3. Dispositif d'actionnement (2) selon la revendication 1 ou la revendication 2, **caractérisé en ce que**
le moyen de commutation (16) et l'élément de réglage (6) présentent une cinématique commune et **en ce qu'**un passage de l'élément de réglage (6) de la position initiale à la position finale comprend automatiquement un passage d'une disposition sans contact du moyen d'entraînement (8) avec le moyen conducteur thermique (14) à une disposition avec contact du moyen d'entraînement (8) et du moyen conducteur thermique (14).

4. Dispositif d'actionnement (2) selon au moins une des revendications précédentes, **caractérisé en ce que**
l'élément de commutation et l'élément de réglage (6) comprennent un composant commun, en particulier **en ce que** l'élément de commutation présente une configuration d'une partie de surface (18) de l'élément de réglage (6) au moyen de laquelle le moyen d'entraînement (8) et/ou le moyen conducteur thermique (14) sont déplaçables transversalement ou obliquement à l'extension du moyen d'entraînement (8) entre l'élément de maintien et l'élément de réglage (6) dans la direction du moyen conducteur thermique (14) ou du moyen d'entraînement (8), par passage de l'élément de réglage (6) de la position initiale à la position finale sur un point de contact (20) de la partie de surface (18) modifiable par le passage de l'élément de réglage (6).

5. Dispositif d'actionnement (2) selon la revendication 4, **caractérisé en ce que** l'élément de réglage (6) peut être passé de la position initiale à la position finale lors de la modification de l'extension dudit au moins un moyen d'entraînement (8) par rotation autour d'un axe de rotation (12) et/ou **en ce que** l'espacement entre l'axe de rotation (12) et le point de contact (20) de la partie de surface (18) modifiable par passage de l'élément de réglage (6) peut être modifié par rotation de l'élément de réglage (6) autour de l'axe de rotation (12).

6. Dispositif d'actionnement (2) selon au moins une des revendications précédentes, **caractérisé en ce que**
ledit au moins un moyen d'entraînement (8) est fixable sur un élément de fixation (22) contre la partie de surface (18) de l'élément de réglage (6) et/ou **en ce que** ledit au moins un moyen d'entraînement (8) repose à plat contre la partie de surface (18) entre la point de contact (20) modifiable par le passage de l'élément de réglage (6) et l'élément de fixation (22).

7. Dispositif d'actionnement (2) selon au moins une des revendications précédentes, **caractérisé en ce que**
la partie de surface (18) de l'élément de réglage (6) est formé par un contour extérieur au moins partiellement arrondi, en particulier circulaire, ovale ou sinusoïdal, et/ou au moins partiellement droit.

8. Dispositif d'actionnement (2) selon au moins une des revendications précédentes, **caractérisé par**
au moins un moyen de rappel contraignant l'élément de réglage (6) en position initiale.

9. Dispositif d'actionnement (2) selon au moins une des revendications précédentes, **caractérisé en ce que**
le moyen conducteur thermique (14) présente un évidement qui s'étend sensiblement parallèlement au moyen d'entraînement (8), à l'intérieur duquel le moyen d'entraînement (8) est disposé de manière à s'étendre entre l'élément de maintien (4) et l'élément de réglage (6), et sur la surface intérieure duquel le moyen d'entraînement (8) repose en position finale de l'élément de réglage (6) et/ou **en ce que** le moyen conducteur thermique (14) est réalisé en forme de bande ou de plaque sur la surface extérieure de laquelle le moyen d'entraînement (8) repose en position finale de l'élément de réglage (6).

10. Dispositif d'actionnement (2) selon au moins une des revendications précédentes, **caractérisé par**
au moins un élément isolant, électriquement isolant et thermiquement conducteur, disposé entre le moyen d'entraînement (8) et le moyen conducteur thermique (14).

11. Dispositif d'actionnement (2) selon au moins une des revendications précédentes, **caractérisé par**
au moins un élément de refroidissement reposant directement contre le moyen d'entraînement (8) et entourant au moins pratiquement en totalité le moyen d'entraînement (8).

12. Dispositif d'actionnement (2) selon au moins une des revendications précédentes, **caractérisé par**
au moins une ailette de refroidissement thermiquement reliable ou reliée au moyen conducteur thermique (14), au moyen de laquelle de la chaleur peut être dissipée dans l'environnement, par convection et/ou par convection forcée, par exemple par exposition au vent de circulation.

13. Dispositif d'actionnement (2) selon au moins une des revendications précédentes, **caractérisé en ce que**
le moyen conducteur thermique (14), l'élément de refroidissement et/ou ladite au moins une ailette de refroidissement sont compris d'une matière plastique, en particulier de silicone, et/ou d'un métal, en particulier du cuivre ou du fer.

14. Système de rétroviseur, tel qu'un miroir intérieur ou extérieur, ou une caméra, pour un véhicule automobile, avec au moins un dispositif d'actionnement (2) selon au moins une des revendications 1 à 13.

15. Véhicule automobile avec au moins un système de rétroviseur, tel qu'un miroir intérieur ou extérieur, ou une caméra selon la revendication 14 et/ou avec au moins un dispositif d'actionnement (2) selon au moins une des revendications 1 à 13.
